# EUROPEAN PATENT APPLICATION

(11) **EP 1 895 402 A2**
(43) Date of publication of application: **05.03.2008**
(21) Application number: 07252668.4
(22) Date of filing: 02.07.2007
(51) Int. Cl.: G06F 3/12

(54) **Printing system, printing method, and printing program**

(30) Priority: 09.08.2006 JP 2006217504
(71) Applicant: NEC Corporation, Minato-ku Tokyo 108-8001 (JP)
(72) Inventor: Omino, Takayuki, Minato-ku, Tokyo 108-8001 (JP); Ichimura, Shigehiro, Minato-ku, Tokyo 108-8001 (JP)
(74) Representative: Abnett, Richard Charles

(57) **Abstract**

The present invention proposes a printing system, printing method, and printing program for printing the content data of the website browsed by a terminal such as mobile phone the mounted memory of which has a small capacity. A mobile phone (20) transmits the access information such as address information of the content data to be printed held in a web server through a network (100) to a print server (40); the print server access a web server (10) based on the access information, downloads the content data to be printed, and transmits the content data to a multi-function printer (30); and the multi-function printer prints the content data.

## Description

### BACKGROUND OF THE INVENTION

### Field of the invention

The present invention relates to printing systems, printing methods, and printing programs for printing the content of a website, in particular, to a printing system, printing method, and printing program for printing the content of a website browsed on a mobile phone.

### Description of related art

In recent years, mobile phones equipped with web browsers have allowed users to view internet/mobile websites. Such mobile phones are capable of displaying internet/mobile website contents such as text, images, moving objects, etc. Often times, there is a need to print out website contents displayed on the mobile phone.

Various techniques for printing website contents displayed on mobile phones have been proposed. For example, a common method is to directly connect the mobile phone to the printer via network cable and send the content data from the mobile phone to the printer. But in this case, since most mobile phones are equipped with minimal memory/storage capacity, it is often difficult to install a printer device driver, and/or store the entire website content data in the cellular telephone, even temporarily for printing.

Another traditional method for printing website contents displayed on a mobile phone include accessing and printing out the relevant website from a personal computer. But in this case, the task is troublesome because the user would have to re-access the website from a personal computer. Another problem with this method is that the user would not be able to access websites specifically made for mobile phones, since some websites for mobile phones restrict access from a computer.

In view of such problems, a printing system is disclosed in Patent Re-Publication WO2002/046905 (patent document 1) in which the mobile phone and the printer are connected by way of a communication network, a print server is arranged on the communication network, and the device driver of the printer is stored in the print server, so that the print server receives printing instruction from the mobile phone and instructs the printer to print the content data.

A printing system is disclosed in Japanese Laid-Open Patent Publication No. 2003-30095 (patent document 2) in which a terminal specifies a content to be printed from contents stored in the print server, and the closest printer downloads and prints the specified content.

### SUMMARY OF THE INVENTION

Although the printing system disclosed in patent document 1 resolves the problem in that the device driver of the printer cannot be stored in the mobile phone, the content data to be printed assumes that the data is stored in the mobile phone, the print server, or in a different server under the management of the print server because the print server allows the cellular telephone to select the content data. Thus, this method is incapable of printing contents, such as websites, that are stored on various web servers on the internet.

In the printing system disclosed in patent document 2, only the content data stored in advance in the specifically prepared print server can be printed, thus the user cannot print the content data provided by a website from a mobile phone.

An exemplary object of the present invention is to provide printing system, printing method, and printing program that improves the drawbacks of the related art, and enables printing of content data of the website browsed at a communication terminal in which the mounted memory has a small capacity including mobile phones.

In order to achieve the above object, an exemplary aspect of a printing system of the present invention includes a web server for managing a website on a network; a terminal having a function of accessing the web site via the network; a printer having a function of performing data communication via the network; and a print server connected to the network; where the terminal includes a print instruction sending unit for sending print instruction information containing access information for accessing the content data to be printed in the web site to the print server; and the print server includes a print data acquiring unit for accessing the web server according to the access information contained in the print instruction information from the terminal, and acquiring the content data to be printed, and a print data transmitting unit for transmitting the acquired content data to the printer.

According to such printing system, the print server downloads the content data to be printed from a specified web server according to the print instruction information from the terminal and transmits the data to the printer, so that the printer prints the content data. Thus, the web site browsed on the terminal can be printed even if the memory mounted on the terminal has a small capacity.

The present invention is configured and functions as above, whereby the terminal transmits the address information of the content data to be printed to the print server; and the print server accesses the web server based on the address information, downloads the content data to be printed, and transmits the content data to he printer, so that the content data of the site for personal computer and the site for mobile phone browsed on a terminal in which the mounted memory has a small storage capacity such as mobile phone can be printed.

### BRIEF DESCRIPTION OF THE DRAWINGS

The invention, together with objects and advantages thereof, may best be understood by reference to the following description of the presently exemplary embodiment together with the accompanying drawings in which:
Fig. 1 is a block diagram showing the entire configuration of a first exemplary embodiment according to the present invention;
Fig. 2 is a block diagram showing the configuration of a print server in the exemplary embodiment described in Fig. 1;
Fig. 3 is a view showing the configuration of data stored in a print setting storage section of the mobile phone in the exemplary embodiment described in Fig. 1;
Fig. 4 is a view showing print instruction information sent by the mobile phone in the exemplary embodiment described in Fig. 1;
Fig. 5 is a view showing user data stored in the print server in the exemplary embodiment described in Fig. 1;
Fig. 6 is a view showing multi-function printer data stored in the print server in the exemplary embodiment described in Fig. 1;
Fig. 7 is a sequence diagram showing the overall operation of the exemplary embodiment described in Fig. 1;
Fig. 8 is a block diagram showing the entire configuration of a second exemplary embodiment according to the present invention;
Fig. 9 is a block diagram showing the configuration of a print server in the exemplary embodiment described in Fig. 8;
Fig. 10 is a view showing content data stored in a browsing content management server in the exemplary embodiment described in Fig. 8;
Fig. 11 is a sequence diagram showing the overall operation of the exemplary embodiment described in Fig. 8; and
Fig. 12 is a sequence diagram showing the overall operation of the exemplary embodiment described in Fig. 8.

### DETAILED DESCRIPTION OF THE EXEMPLARY EMBODIMENTS

An exemplary embodiment according to the present invention will now be described with reference to the drawings.

### First exemplary embodiment

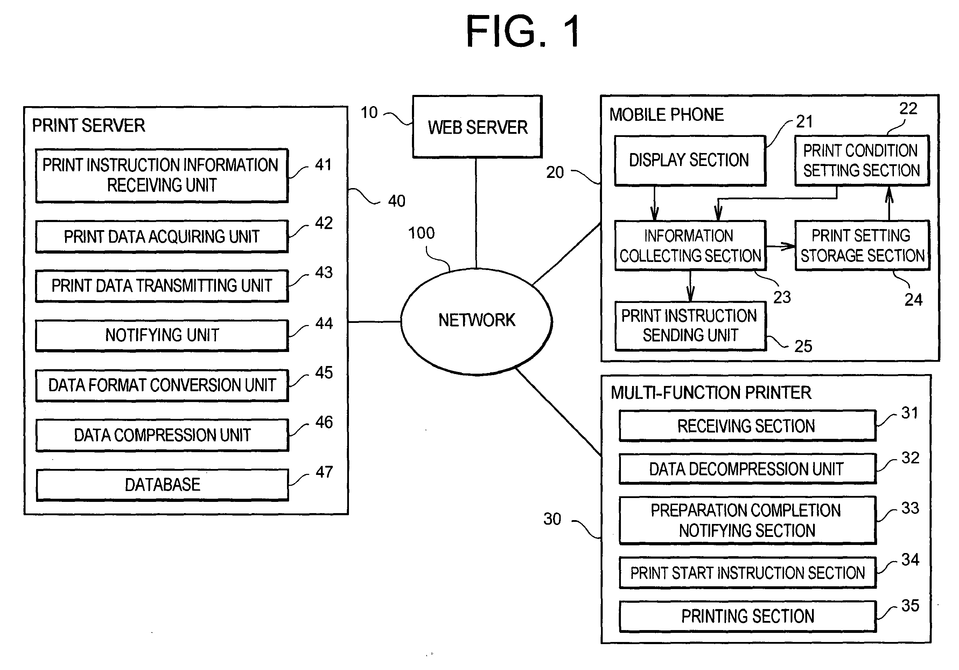

Fig. 1 is a block diagram showing the entire configuration of a printing system according to a first exemplary embodiment of the present invention.

The printing system of the first exemplary embodiment is configured by a web server 10 for managing the website on a network 100, a mobile phone 20 serving as a terminal having a function of accessing the website via the network 100, a multi-function printer 30 having a function of performing data communication via the network 100 and a function of printing the input data, and a print server 40 connected to the network 100.

A plurality of web servers 10 is installed on the network 100, and the mobile phone 20 accesses each web server 10 to allow the user to browse through the websites of various contents. A gateway device may also be arranged that enables communication by mutually converting data of different protocols between the website 10 and the mobile phone 20.

The mobile phone 20 is used in the first exemplary embodiment, but is not limited thereto, and smart phone, PDA, and the like may be used as long as the communication terminal is installed with a browser function of displaying the website.

The multi-function printer 30 is network correspondence equipment in which functions of scanner, FAX, E-mail, and the like are integrated with the printer. A plurality of multi-function printers 30 is installed at various locations in the present exemplary embodiment.

The mobile phone 20 shown in Fig. 1 is configured including a display section 21 for accessing each web server 10 according to the input address and displaying the site for personal computer or the site for mobile phone on a screen; a print condition setting section 22 for setting the print conditions by data input through the operation of the user and creating print setting information when printing the content of the website displayed on the display section 21; an information collecting section 23 for collecting access information including address information, authentication information, and the like for accessing the content data to be printed, created print setting information, and individual data of the mobile phone 20 when printing the content of the website; a print setting storage section 24 for temporarily storing the print setting information; and a print instruction sending unit 25 for sending the collected information to the print server 40 as print instruction information.

The print setting information created in the print condition setting section 22 is categorized into Location information (address information) indicating the position of the multi-function printer 30 on the network, double-sided setting indicating whether or not to perform double-sided printing, print number indicating the number of prints to be made, quality of print, type of paper to be printed on, paper size, and color setting for setting whether to print in black and white or in color. This categorization is not limited thereto, and categories may be added as necessary.

The print condition setting section 22 omits the setting process when the print setting is the same as the previous printing. In this case, the print condition setting section 22 reads the previous print setting information from the information stored in the print setting storage section 24. The print condition setting section 22 may be configured to check with the user if the setting is the same setting as the previous printing for each setting item of the print setting information. Among each setting items of the print setting information, the setting may be performed for every print execution for items having a high possibility of being different for every print execution (print number etc.).

The individual data of the mobile phone 20 collected by the information collecting section 23 are telephone number, e-mail address, and the like of the mobile phone 20. The access information includes Location information (address information) indicating the position of the content on the network, authentication information (user ID, password, etc.) to be input in authentication for contents that requires authentication, and additional information indicating other information necessary when browsing the content.

The information collecting section 23 has a function of storing, in place of the authentication information, information (flag etc.) indicating that authentication is necessary to acquire the content in the access information when the access information containing the same authentication information has been previously collected.

Therefore, the authentication information (user ID, password, etc.) is transmitted only in the first printing, when printing the content that requires authentication, whereby the security is enhanced. Furthermore, the authentication information may be transmitted in an encrypted manner when transmitting the authentication information in the first printing. The security thereby becomes stronger. The authentication information may be registered in the print server 40 in advance. In this case, the authentication information itself is not transmitted, and the information indicating that authentication is required is transmitted. The security is further enhanced since the authentication information itself does not need to be transmitted on the network.

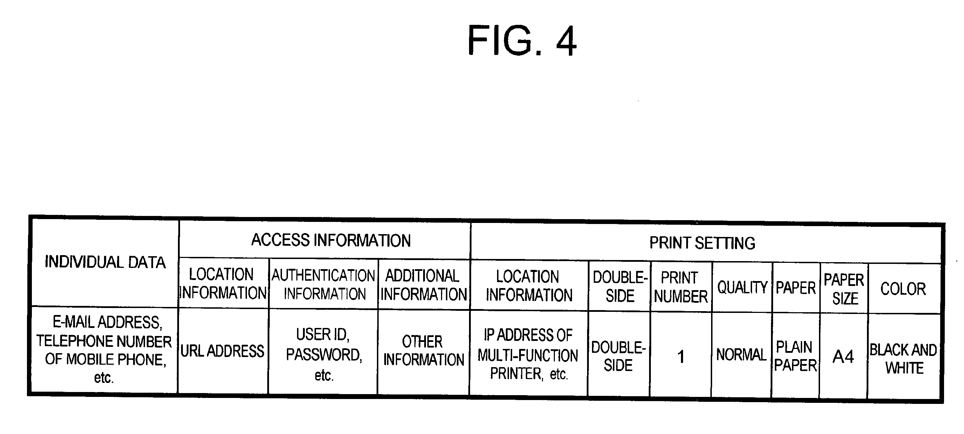

The information collecting section 23 has a function of adjusting the access information, print setting information, and individual data to the format shown in Fig. 4, and transmitting the data of adjusted format to the print instruction sending unit 25. The information collecting section 23 further has a function of transmitting the collected print setting information to the print setting storage section 24.

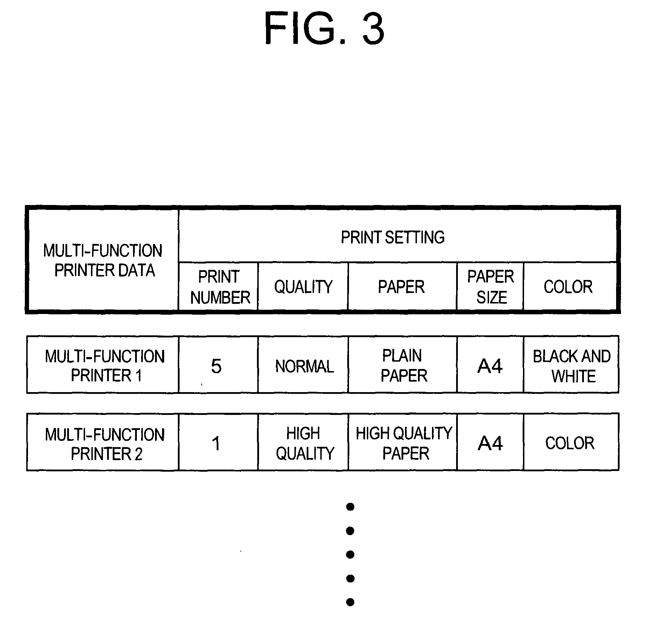

As shown in Fig. 3, the print setting storage section 24 has a function of storing the print setting information of previous printing for every used multi-function printer.

The print server 40 shown in Fig. 1 includes a print instruction information receiving unit 41 for receiving the print instruction information sent from the mobile phone 20; a print data acquiring unit 42 for accessing the web server 10 according to the access information contained in the received print instruction information and acquiring the content data to be printed; and a print data transmitting unit 43 for transmitting the content data to the multi-function printer 30.

The print server 40 is also configured including a notifying section 44 for making various notifications, for example, printing cannot be performed with the print setting information, multi-function printer specified in the print setting information does not exist, and the like to the mobile phone 20; a data format conversion unit 45 for converting the data format of the content data acquired in the print data acquiring unit 42 to a format printable by the multi-function printer 30 indicated by the print instruction information from the mobile phone 20; a data compression unit 46 for compressing the content data acquired in the print data acquiring unit 42; and a database 47 for storing various data.

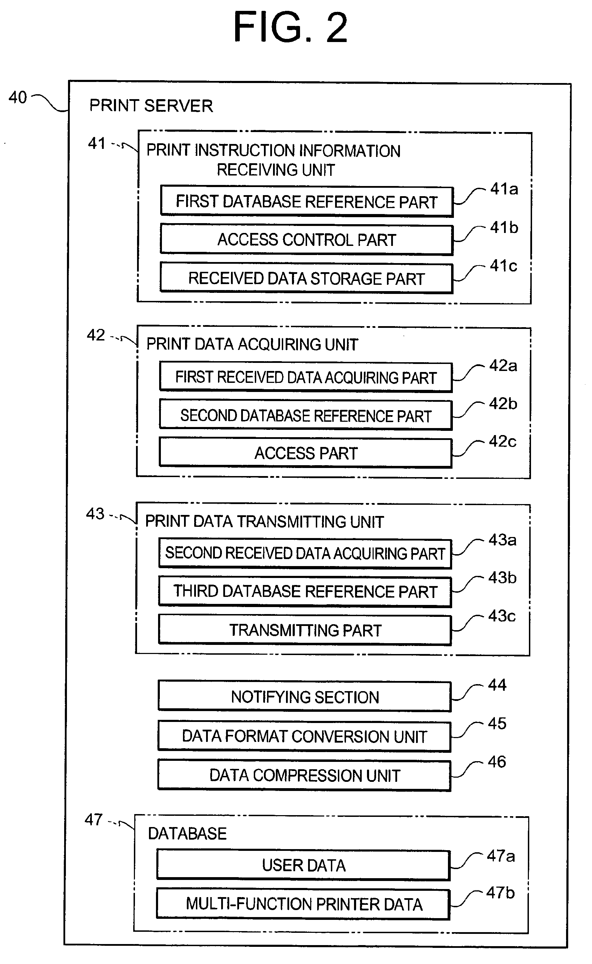

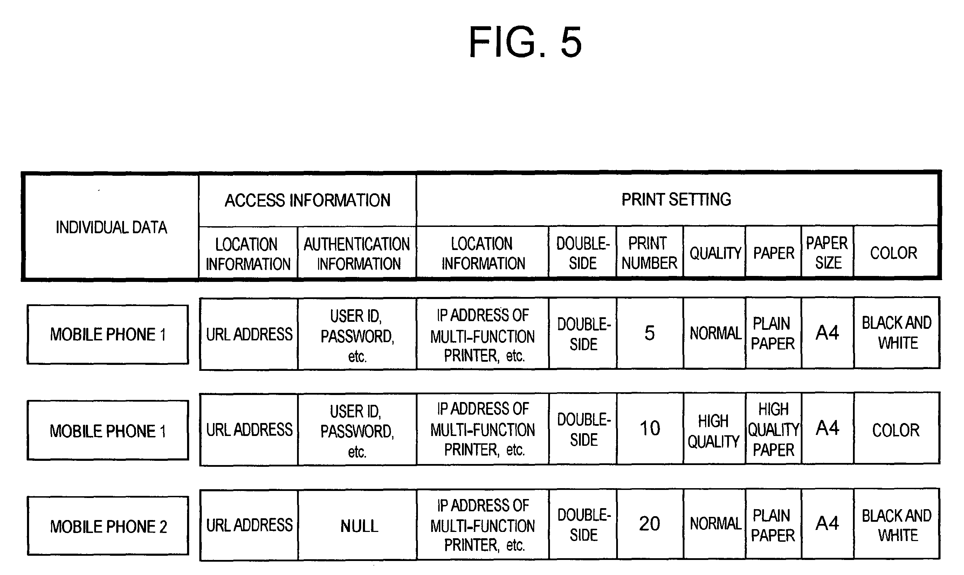

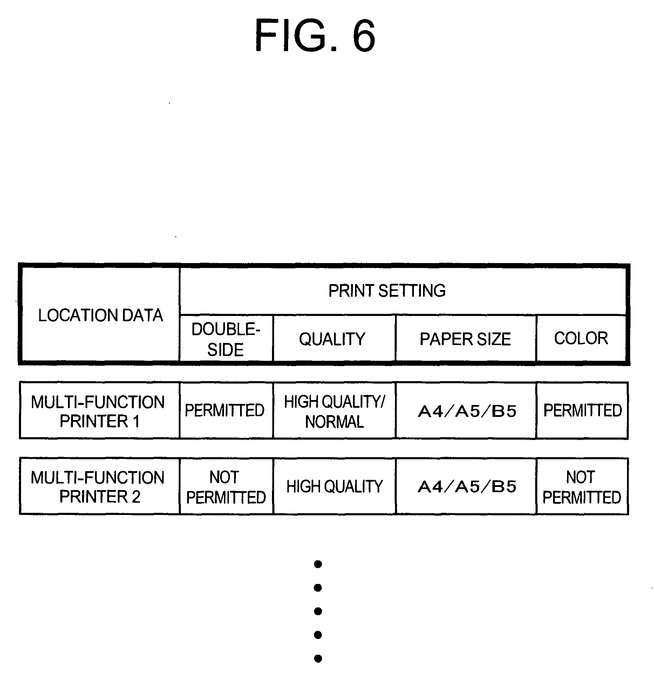

Fig. 2 is a block diagram showing the configuration of the print server shown in Fig. 1. The database 47 stores user data 47a indicating information associated with the content and the print setting information printed for each individual data of the mobile phone, and multi-function printer data 47b indicating the print setting that is possible in the multi-function printer for each multi-function printer available to the print server 40, where the user data 47a is stored in a configuration shown in Fig. 5, and the multi-function printer data 47b is stored in a configuration shown in Fig. 6.

The print instruction information receiving unit 41 includes a first database reference part 41a that references the user data 47a of the database 47 and checks the presence of data record that matches the received individual data of the mobile phone 20, an access control part 41b that permits access by the mobile phone 20 if the matching data record is found by the first database reference part 41a and rejects the access by the mobile phone 20 if the matching data record is not found, and a received data storage part 41c that stores the received print instruction information when access is permitted by the access control part 41b.

The print data acquiring unit 42 includes a first received data acquiring part 42a, a second database reference part 42b, and an access part 42c.

The first received data acquiring part 42a has a function of acquiring the access information contained in the print instruction information stored in the received data storage part 41c and transmitting the access information to the second database reference part 42b and the access part 42c. The second database reference part 42b has a function of referencing the user data 47a of the database 47, acquiring the corresponding authentication information, and transmitting the authentication information to the access part 42c when information indicating that authentication is necessary is added to the acquired access information. The access part 42c has a function of accessing the web server 10 based on the access information received from the first received data acquiring part 42a and the second database reference part 42b, and acquiring the content data.

The print data transmitting unit 43 includes a second received data acquiring part 43a, a third database reference part 43b, and a transmitting part 43c.

The second received data acquiring part 43a has a function of acquiring the individual data and the print setting information contained in the print instruction information stored in the received data storage part 41c, and transmitting the individual data and the print setting information to the third database reference part 43b and the transmitting part 43c.

The third database reference part 43b has a function of referencing the multi-function printer data 47b of the database 47 with the Location information of the print setting information from the second received data acquiring part 43a as the key, determining whether or not each categorization of the print setting information is available in the relevant multi-function printer, and transmitting the print setting information as it is to the transmitting part 43c if each categorization is available, and resetting the print setting information to the optimum information from the possible settings and transmitting the resultant information to the transmitting part 43c if the categorization is not available. Notification that printing is not possible with the specified print setting information may be made to the mobile phone 20 via the communication section 44. The multi-function printer data 47b is referenced with the Location information of the print setting information as the key, and notification that the multi-function printer specified by the user is not available is made via the communication section 44 if the relevant multi-function printer data 47b is not present. The individual data is used in the notification. For instance, if an e-mail address of the mobile phone 20 is used for the individual data, the notification is made by distributing an e-mail to the relevant address.

The transmitting part 43c has a function of transmitting the content data acquired by the print data acquiring unit 42 and the print setting information and the individual data received from the third database reference part 43b to the multi-function printer 30.

The multi-function printer 30 shown in Fig. 1 includes a receiving section 31 for receiving the content data to be printed, print setting information, and individual data; a data decompression unit 32 for decompressing the compressed content data; a preparation completion notifying section 33 for notifying that printing preparation of the content specified to be printed by the user is completed; a print start instruction section 34 for inputting print start instruction through the operation of the user who has confirmed the notification by the preparation completion notifying section 33; and a printing section 35 for printing the received content.

The preparation completion notifying section 33 displays information (URL etc.) related to the content specified by the user on the display screen and the like of the multi-function printer 30, and notifies that printing preparation of the content is completed.

The print start instruction section 34 is configured by touch panel of a liquid crystal screen, button, and the like, and the user operates the touch panel and the like to input the print start data. If the print start instruction section 34 is not operated within a predetermined time from the notification that printing preparation is completed by the preparation completion notifying section 33, the content to be printed or the individual data may be deleted so that printing cannot be performed.

Printing can be performed only when the user is near the multi-function printer 30 and the instruction to start printing is input by the user through the preparation completion notifying section 33 and the print start instruction section 34. This prevents the user from forgetting to take the printed material. Important printed material is prevented from being left forgotten, thereby preventing leakage of information.

The printing section 35 may delete the information related to the content data, the individual data and the print setting information received by the receiving section 31 after printing is completed. The information leakage can be prevented by avoiding predetermined information from remaining in the multi-function printer 30.

The overall operation of the first exemplary embodiment will now be described. The printing method of the present invention will also be described illustrating each step.

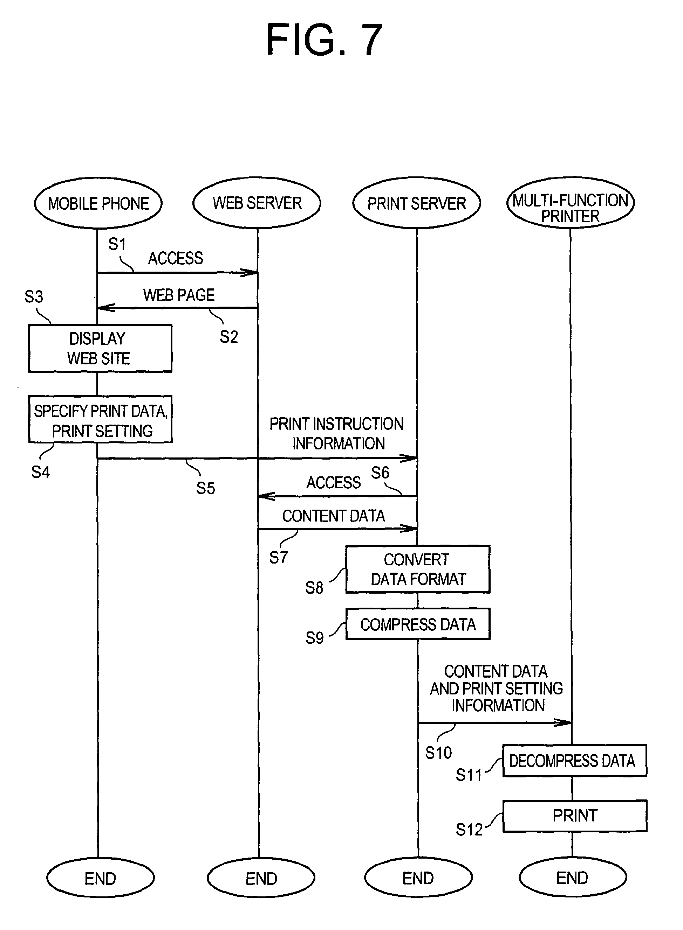

Fig. 7 is a sequence diagram showing the entire operation of the printing system of the first exemplary embodiment.

First, the browser of the mobile phone 20 is activated by the operation of the user, and the mobile phone 20 accesses the web server 10 according to the access information when access information such as URL address and password are input (Fig. 7: step S1). The mobile phone 20 that has accessed the web server 10 reads the web page data stored in the web server 10 (Fig. 7: step S2). The web page of the site for personal computer or site for mobile phone is displayed on the screen by the display section 21 of the mobile phone 20 (Fig. 7: step S3).

In the mobile phone 20, the content in the website to be printed is specified by the operation of the user, and the print condition data for printing the content is input to the print condition setting section 22 (Fig. 7: step S4). After the print condition data is input, the print instruction information including the access information for accessing the content data to be printed and the print setting information are collected by the information collecting section 23, and the collected information is sent to the print server 40 by the print instruction information sending unit 25 (Fig. 7: step S5, print instruction sending step).

Subsequently, in the print server 40, the print instruction information receiving unit 41 receives the print instruction information, and the print data acquiring unit 42 accesses the web server 10 based on the access information contained in the print instruction information (Fig. 7: step S6), and downloads the content data to be printed (Fig. 7: step S7, print data acquiring step). In this case, if ID/password input is necessary in the website of the web server 10 accessed by the print server 40, the print server 40 inputs the authentication information such as ID, password, and the like contained in the access information received from the mobile phone 20 to access the site.

Regarding the operation of the print server 40 to receive the print instruction information and the print data acquiring step, the contents of the operation and the step may be programmed and executed by a computer controlling the operation of the print server 40 as the print setting information receiving process and the print data reading process.

In the print server 40, the data format conversion unit 45 converts the format of the downloaded content data to the data format printable in the multi-function printer 30 (Fig. 7: step S8, data format converting step), and the data compression unit 46 compresses the content data (Fig. 7: step S9, data compression step). The content data and the print setting information are then transmitted to the multi-function printer 30 by the print data transmitting unit 43 (Fig. 7: step S10, print data transmitting step).

Regarding the data format converting step, the data compression step and the print data transmitting step, the contents of the steps may be programmed and executed by the computer controlling the operation of the print server 40 as data format converting process, data compression process, and print instruction process.

Subsequently, in the multi-function printer 30, the receiving section 31 receives the content data and the print setting information transmitted from the print server 40, and the data decompression unit 32 decompresses the compressed content data (Fig. 7: step S11). The printing section 35 then prints the content data based on the print setting information (Fig. 7: step S12, printing step).

The first exemplary embodiment is configured including the print server 40 and the multi-function printer 30, but is not limited thereto, and may be configured including a multi-function printer installed with the function of the print server 40 instead of including the print server 40 and the multi-function printer 30.

According to the first exemplary embodiment, the user is able to print the information content of the site for personal computer or the site for mobile phone browsed with the mobile phone 20. Advantages such that the site which was difficult to see on the screen of the mobile phone 20 can be printed and viewed on a paper are obtained.

### Second exemplary embodiment

The second exemplary embodiment of the present invention will now be described.

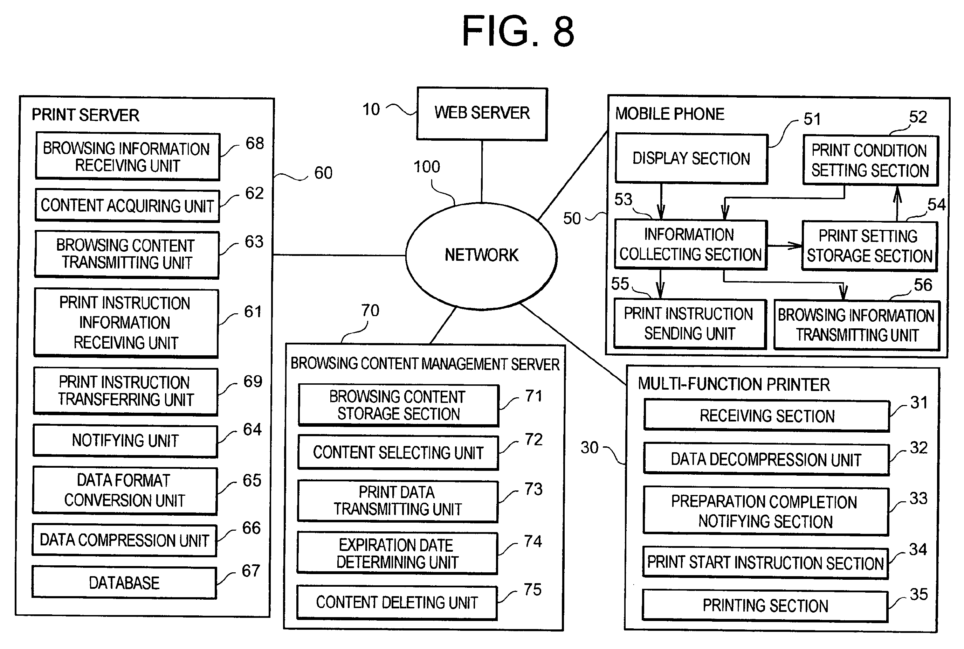

Fig. 8 is a block diagram showing the entire configuration of a printing system of the second exemplary embodiment according to the present invention.

The printing system of the second exemplary embodiment is configured including a web server 10 for managing the website on the network 100; a mobile phone 50 having the function of accessing the website via the network 100; a 2-multi-function printer 30 having a function of performing data communication via the network 100 and a function of printing the input data; a print server 60 connected to the network 100; and a browsing content management server 70.

In the second exemplary embodiment, a plurality of web servers 10 is installed on the network 100, and the mobile phone 50 displays websites of various contents by accessing each website 10, similar to the first exemplary embodiment. Furthermore, the multi-function printer 30 is a network-enabled equipment in which the functions of scanner, FAX, E-mail etc. are integrated with the printer, and a plurality of multi-function printers 30 is arranged at various locations.

The mobile phone 50 is used in the second exemplary embodiment, but is not limited thereto, and smart phone and PDA may also be used as long as the communication terminal which installs a browser function of displaying the website.

The mobile phone 50 shown in Fig. 8 includes a display section 51, a print condition setting section 52, an information collecting section 53, a print setting storage section 54, and a print instruction sending unit 55, similar to the configuration of the first exemplary embodiment. The mobile phone 50 also includes a browsing information transmitting unit 56 for transmitting the access information containing address information and authentication information necessary in accessing the content data of the accessed website, and individual data of the mobile phone 50 to the print server 60 as browsing information.

The print server 60 shown in Fig. 8 includes a browsing information receiving unit 68 for receiving the browsing information from the mobile phone 50, a content acquiring unit 62 for accessing the web server 10 according to the browsing information and acquiring the corresponding content data, a browsing content transmitting unit 63 for associating the acquired content data with the individual data of the mobile phone 50 and transmitting the same to the browsing content management server 70, a print instruction information receiving unit 61 for receiving the print instruction information sent from the mobile phone 50, and a print instruction transferring unit 69 for transferring the received print instruction information to the browsing content management server 70.

The print server 60 also includes a notifying section 64, a data format conversion unit 65, a data compression unit 66, and a database 67 for storing user data 67a and multi-function printer data 67b, similar to the configuration of the first exemplary embodiment.

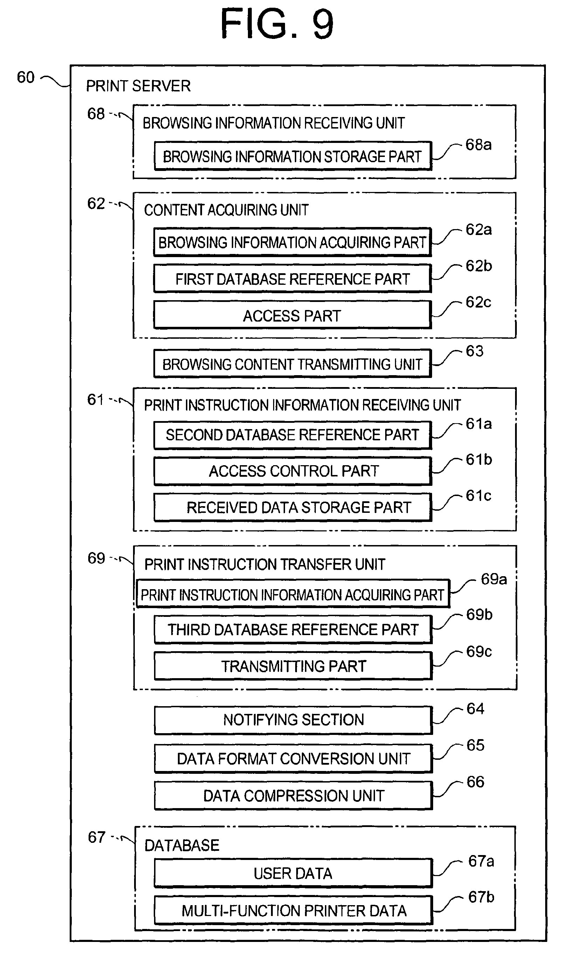

Fig. 9 is a block diagram showing the configuration of the print server shown in Fig. 8. The browsing information receiving unit 68 includes a browsing information storage part 68a for temporarily storing the received browsing information.

The content acquiring unit 62 includes a browsing information acquiring part 62a, a first database reference part 62b, and an access part 62c.

The browsing information acquiring part 62a has a function of acquiring the browsing information stored in the browsing information storage part 68a and transmitting the browsing information to the first database reference part 62b and the access part 62c. If information indicating that authentication is necessary is contained in the browsing information, the first database reference part 62b references the user data 67a of the database 67, acquires the corresponding authentication information, and transmits the information to the access part 62c. The access part 62c has a function of accessing the web server 10 based on the access information received from the browsing information acquiring part 62a and the first database reference part 62b, and acquiring the content data.

The print instruction information receiving unit 61 includes a second database reference part 61a that references the user data 67a of the database 67 and checks the presence of data record that matches the received individual data of the mobile phone 50, an access control part 61b that permits access by the mobile phone 50 if the matching data record is found by the second database reference part 61a and rejects the access by the mobile phone 50 if the matching data record is not found, and a received data storage part 61c that stores the received print instruction information when access is permitted by the access control part 61b.

The print instruction transferring unit 69 includes a print instruction information acquiring part 69a, a third database reference part 69b, and a transmitting part 69c.

The print instruction information acquiring part 69a has a function of acquiring the print instruction information stored in the received data storage part 61c, and transmitting the print instruction information to the third database reference part 69b.

The third database reference part 69b has a function of referencing the multi-function printer data 67b of the database 67 with the Location information of the print setting information from the print instruction information acquiring part 69a as the key, determining whether or not each categorization of the print setting information is available in the relevant multi-function printer, and transmitting the print setting information as it is to the transmitting part 69c if each categorization is available, and resetting the print setting information to the optimum information from the possible settings and transmitting the print instruction information to the transmitting part 69c if the categorization is not available. Notification that printing is not possible with the specified print setting information may be made to the mobile phone 50 via the communication section 64. The multi-function printer data 67b is referenced with the Location information of the print setting information as the key, and notification that the multi-function printer specified by the user is not available is made via the communication section 64 if the Location information of the relevant multi-function printer data 67b is not present. The individual data is used in the notification. For instance, if an e-mail address of the mobile phone 50 is used for the individual data, the notification is made by distributing an e-mail to the relevant address.

The transmitting part 69c has a function of transmitting the print instruction information received from the third database reference part 69b to the browsing content management server 70.

The browsing content management server 70 shown in Fig. 8 includes a browsing content storage section 71 for storing the content data associated with the individual data from the print serer 60, a content selecting unit 72 for selecting the corresponding content data from the browsing content storage section 71 according to the print instruction information transferred from the print server 60, a print data transmitting unit 73 for transmitting the selected content data to the multi-function printer 30, an expiration date determining unit 74 for determining whether or not the expiration date is reached with respect to the content data stored in the browsing content storage section 71, and a content deleting unit 75 for deleting the expired content data.

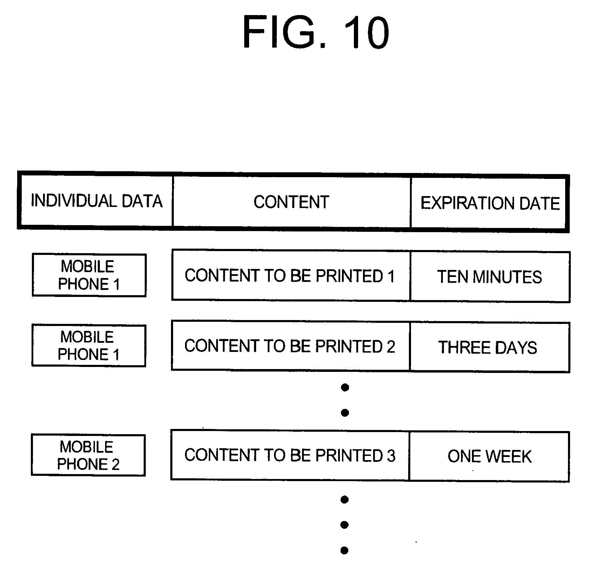

The browsing content storage section 71 stores the browsing content for each individual data of the mobile phone, and expiration date is set for each content, as shown in Fig. 10. The expiration date is contained in the browsing information transmitted from the mobile phone 50 in advance, and the browsing content transmitting unit 63 of the print server 60 associates the expiration date and the content data and transmits the same.

The content deleting unit 75 deletes the expired content data, thereby preventing the storage capacity of the browsing content storage section 71 from being full and reducing the risk of information leakage caused by long-term storage of useless content data.

The multi-function printer 30 shown in Fig. 8 has a configuration similar to the first exemplary embodiment and includes the receiving section 31, the data decompression unit 32, the preparation completion notifying section 33, the print start instruction section 34, and the printing section 35.

The overall operation of the second exemplary embodiment will now be described. The printing method of the present invention will also be described illustrating each step.

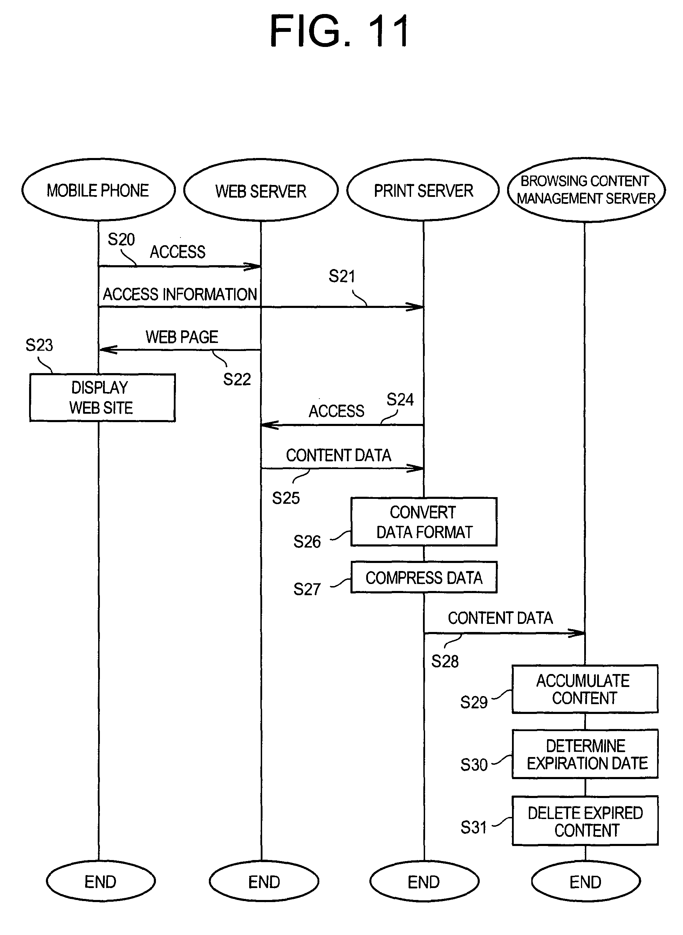

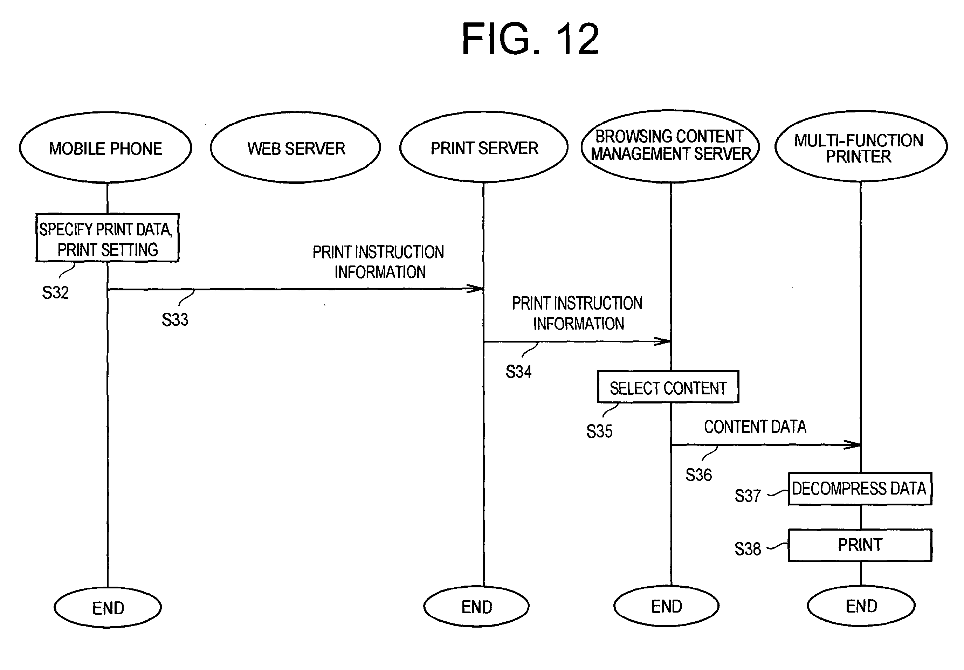

Figs. 11 and 12 are sequence diagrams showing the operation of the entire printing system of the second exemplary embodiment. The printing method according to the present invention will be described illustrating each step.

First, the browser of the mobile phone 50 is activated by the operation of the user, and the mobile phone 50 accesses the web server 10 according to the access information when access information such as URL address and password are input (Fig. 11: step S20). At the same time, the relevant access information is transmitted to the print server 60 by the browsing information transmitting unit 56 (Fig. 11: step S21, access information transmitting step).

The mobile phone 50 that has accessed the web server 10 reads the web page data stored in the web server 10 (Fig. 11: step S22). The web page of the site for personal computer or site for mobile phone is displayed on the screen by the display section 51 (Fig. 11: step S23).

The print server 60 receives the access information from the mobile phone 50, accesses the web server 10 based on the access information (Fig. 11: step S24), and downloads the content data by means of the content acquiring unit 62 (Fig. 11: step S25, content data acquiring step). In this case, if ID/password input is necessary for the print server 60 to access the website of the web server 10, the print server 60 inputs the authentication information such as ID, password, and the like contained in the access information received from the mobile phone 50 to access the site.

Regarding the operation of the print server 60 to receive the access information and the content data acquiring step, the contents of the operation and the step may be programmed and executed by a computer controlling the operation of the print server 60 as the data access information receiving process and the data reading process.

Subsequently, in the print server 60, the data format conversion unit 65 converts the format of the downloaded content data to the data format printable in the multi-function printer 30 (Fig. 11: step S26), and the data compression unit 66 compresses the content data (Fig. 11: step S27). The browsing content transmitting unit 63 transmits the content data to the browsing content management server 70 (Fig. 11: step S28, content data transmitting step).

In the browsing content management server 70, the content data from the print server 60 is stored in the browsing content storage section 71 (Fig. 11: step S29, content data storing step). Regarding the content data storing step, the content of the step may be programmed and executed by the computer controlling the operation of the browsing content management server 70 as the content data storing process.

Furthermore, in the browsing content management server 70, the expiration date determining unit 74 determines whether or not the expiration date is reached with respect to the stored content data (Fig. 11: step S30, expiration date determining step), and the content deleting unit 75 deletes the expired content data (Fig. 11: step S31, content deleting step).

Regarding the expiration date determining step and the content deleting step, the contents of the steps may be programmed and executed by the computer controlling the operation of the print server 60 as the expiration date determining process and the content deleting process.

When the user attempts to print the content of a specific website, the content in the website to be printed is specified and the print condition data for printing the content is input to the print condition setting section 52 through the operation of the user at the mobile phone 20 (Fig. 12: step S32). After the print condition data is input, the print instruction information containing the access information for accessing the content data to be printed and the print setting information are collected by the information collecting section 53, and sent to the print server 60 by the print instruction sending unit 55 (Fig. 12: step S33, print instruction sending step).

In the print server 60, the print instruction information receiving unit 61 receives the print instruction information from the mobile phone 50, and the print instruction transferring unit 69 transfers the print instruction information to the browsing content management server 70 (Fig. 12: step S34, print instruction transferring step). The browsing content management server 70 receives the print instruction information transferred from the print server 60, and the content selecting unit 72 selects the content data specified by the print instruction information (Fig. 12: step S35, print data selecting step), and the print data transmitting unit 73 transmits the content data and the print setting information to the multi-function printer 30 (Fig. 12: step S36, print data transmitting step).

Regarding the operation of the browsing content management server 70 to receive the print instruction information, the print data selecting step, and the print data transmitting step, the contents of the operation and the steps may be programmed and executed by the computer controlling the operation of the browsing content management server 70 as the print instruction information receiving process, the print data reading process, and the print instruction process.

Subsequently, in the multi-function printer 30, the receiving section 31 receives the content data and the print setting information transmitted from the browsing content management server 70, and the data decompression unit 32 decompresses the compressed content data (Fig. 12: step S37, data decompression step). The printing section 35 prints the content data based on the print setting information (Fig. 12: step S38, printing step).

The second exemplary embodiment is configured including the print server 60 and the browsing content management server 70, but is not limited thereto, and may be configured including a server having the functions of both the print server 60 and the browsing content management server 70 instead of including the print server 60 and the browsing content management server 70. In another configuration, the functions of the print server 60 and the browsing content management server 70 may be installed in the multi-function printer 30.

According to the second exemplary embodiment, the user is able to collectively print the content data the user desires to print by accumulating the content data of the website browsed at the mobile phone 20 in the browsing content management server 70.

Next, other exemplary embodiments according to the present invention will be described.

In the printing system, the print instruction sending unit of the terminal may have a function of transmitting the print instruction information including address information of the printer specified as printing destination, print setting information, and the access information to the print server; and the print data transmitting unit of the print server may have a function of transmitting the content data acquired by the print data acquiring unit with the print setting information to a printer corresponding to the address information indicated by the print instruction information from the terminal.

Accordingly, since the address information of the printer for performing printing and the print setting information indicating the manner of printing are contained in the print instruction information sent by the terminal, the web site browsed at the terminal can be printed by the printer specified by the user.

Furthermore, in the printing system, the access information transmitted by the print instruction transmitting unit of the terminal may be address information and authentication information for accessing the content data to be printed.

Accordingly, when printing the content that requires authentication in browsing, the authentication information such as user ID and password that are to be input when accessing the relevant content are sent to the print server, whereby the print server can acquire the content data by using the authentication information.

Moreover, in the printing system, the print server may include a data format conversion unit for converting the data format of the content data acquired by the print data acquiring unit to a printable format for a printer indicated by the print instruction information from the terminal. Various content data can be printed by the printer regardless of the data format.

Moreover, in the printing system, the print server may include a data compression unit for compressing the content data acquired by the print data acquiring unit; and the printer may include a data decompression unit for decompressing the content data from the print server. Accordingly, the time required for data transmission/reception between the print server and the printer can be reduced.

A printing system of the present invention includes a web server for managing a website on a network; a terminal having a function of accessing the web site via the network; a printer having a function of performing data communication via the network; and a browsing content management server and a print server connected to the network; where the terminal includes a browsing information transmitting unit for transmitting access information for accessing the content data used when the terminal accesses the content data of the web site to the print server as browsing information, and a print instruction sending unit for sending print instruction information containing the access information for accessing the content data to be printed in the web site to the print server; the print server includes a content acquiring unit for accessing the web server according to the browsing information from the terminal and acquiring the corresponding content data, a browsing content transmitting unit for transmitting the acquired content data to the browsing content management server, and a print instruction transferring unit for transferring the print instruction information from the terminal to the browsing content management server; and the browsing content management server includes a browsing content storage section for storing the content data from the print server, a content selecting unit for selecting the corresponding content data from the browsing content storage section according to the print instruction information from the print server, and a print data transmitting unit for transmitting the selected content data to the printer.

According to such printing system, since the content data of the web site browsed by the terminal is stored in the browsing content management server, the user can collectively print the content the user desires to print that is browsed on the terminal.

In the printing system, the browsing content management server may include an expiration date determining unit for determining whether or not expiration date is reached with respect to the content data stored in the browsing content storage section, and a content deleting unit for deleting the expired content data.

Accordingly, the storage capacity of the browsing content storage section of the browsing content management server is maintained, and risk of information leakage by long-term storage of data is reduced.

A printing method of the present invention is a printing method where a web server for managing a website, a terminal having a function of accessing the website, a printer having a communication function, and a print server having a communication function are connected to each other by way of a network, the method including the steps of: a print instruction sending step in which the terminal sends print instruction information containing access information for accessing content data to be printed in the website to the print server; a print data acquiring step in which the print server accesses the web server according to the print instruction information and acquires the content data to be printed; a print data transmitting step in which the print server transmits the acquired content data to the printer; and a printing step in which the printer prints the content data from the print server according to the instruction from the print server.

According to such printing method, the terminal transmits the access information such as address information of the content data to be printed in the website to the print server, the print server downloads the content data to be printed based on the access information from the specified web server and transmits the content data to the printer, and the printer prints the content data. Thus, the website browsed by the terminal can be printed even if the memory mounted on the terminal has a small capacity.

The printing method further may include a data format converting step in which the print server converts the data format of the acquired content data to a printable format of the printer after the print data acquiring step.

Therefore, the printer can print various content data regardless of the data format.

Furthermore, the printing method may include a data compression step in which the print server compresses the acquired content data after the print data acquiring step, and a data decompression step in which the printer decompresses the content data from the print server before the printing step.

Accordingly, the time required for data transmission/reception among the print server, the browsing content management server, and the printer can be reduced.

A printing method of the present invention also refers to a printing method where a web server for managing a website, a terminal having a function of accessing the website, a printer having a communication function, and a print server and a browsing content management server having a communication function are connected to each other by way of a network, the method including the steps of: an access information transmitting step in which the terminal transmits access information for accessing the content data of the website accessed by the terminal to the print server; a content data acquiring step in which the print server accesses the web server according to the access information and acquires the corresponding content data; a content data transmitting step in which the print server transmits the acquired content data and the corresponding access information to the browsing content management server; a content data storing step in which the browsing content management server stores the content data associated with the access information; a print instruction sending step in which the terminal sends print instruction information containing access information for accessing the content data to be printed to the print server; a print instruction transferring step in which the print server transfers the print instruction information to the browsing content management server; a print data selecting step in which the browsing content management server selects the content data to be printed based on the access information contained in the print instruction information; a print data transmitting step in which the browsing content management server transmits the selected content data to the printer; and a printing step in which the printer prints the content data from the browsing content management server according to the instruction from the browsing content management server.

According to such printing method, the print server acquires the content data of the website browsed by the terminal from the web server and transmits the content data to the browsing content management server, the browsing content management server stores the content data and selects and sends the appropriate content data to the printer according to the print instruction information from the terminal. Therefore, the user is able to collectively print the content browsed at the terminal when desiring to print the content.

The printing step may also include an expiration date determining step in which the browsing content management server determines whether or not the expiration date is reached with respect to the stored content data; and a content deleting step in which the browsing content management server deletes the expired content data after the access data storing step.

Therefore, the storage capacity of the browsing content storage section of the browsing content management server is maintained, and risk of information leakage by long-term storage of the data is reduced.

A printing program of the present invention is a printing program for printing a content of a website managed by a web server accessed by a terminal, and the program is a printing program for a computer to execute; a print instruction information receiving process of receiving print instruction information containing access information for accessing the content data to be printed in the website from the terminal; a print data reading process of accessing the website according to the access information and reading the content data to be printed ; and a print instruction process of transmitting the read content data to the printer.

The printing program may also enable the computer to further execute a data format converting process of converting the data format of the content data read in the print data reading process to a printable format for the printer.

The printing program may also enable the computer to execute a data compression process of compressing the content data read in the print data reading process.

The printing program may further enable the computer to execute a data access information receiving process of receiving the access information for accessing the content data of the website accessed by the terminal from the corresponding content data according to the access information and reading the content data, and a content data storing process of storing the read content data and the corresponding access information; and the process content in the print data reading process may be specified so that the content data corresponding to the print instruction information read in the print instruction information reading process is read among the content data stored in the content data storing process.

The printing program may further enable the computer to execute an expiration date determining process of determining whether or not expiration date is reached with respect to the content data stored in the content data storing process, and a content deleting process of deleting the expired content data.

According to the printing program, similar effects as the printing system and the printing method of the present invention described above can be obtained.

It should be apparent to those skilled in the art that the present invention may be embodied in many other specific forms without departing from the scope of the invention. Therefore, the present invention is not to be limited to the details given herein, but may be modified within the scope and equivalence of the appended claims.

## Claims

1. A printing system comprising a web server for managing a website on a network; a terminal having a function of accessing the web site via the network; a printer having a function of performing data communication via the network and printing input data; and a print server connected to the network; wherein
the terminal includes a print instruction sending unit for sending print instruction information containing access information for accessing the content data to be printed in the web site to the print server; and
the print server includes a print data acquiring unit for accessing the web server according to the access information contained in the print instruction information from the terminal and acquiring the content data to be printed, and a print data transmitting unit for transmitting the acquired content data to the printer.

2. The printing system as claimed in claim 1, wherein
the network includes a browsing content management server in addition to the print server;
the terminal includes a browsing information transmitting unit for transmitting access information for accessing the content data used when the terminal accesses the content data of the web site to the print server as browsing information in addition to the print instruction sending unit;
the print server includes a content acquiring unit for accessing the web server according to the browsing information from the terminal and acquiring the corresponding content data, a browsing content transmitting unit for transmitting the acquired content data to the browsing content management server, and a print instruction transferring unit for transferring the print instruction information from the terminal to the browsing content management server, in place of the print instruction sending unit; and
the browsing content management server includes a browsing content storage section for storing the content data from the print server, a content selecting unit for selecting the corresponding content data from the browsing content storage section according to the print instruction information from the print server, and a print data transmitting unit for transmitting the selected content data to the printer.

3. The printing system as claimed in claim 1, wherein
the print instruction sending unit of the terminal has a function of transmitting the print instruction information including address information of the printer specified as printing destination, print setting information, and the access information to the print server; and
the print data transmitting unit of the print server has a function of transmitting the content data acquired by the print data acquiring unit with the print setting information to a printer corresponding to the address information indicated by the print instruction information from the terminal.

4. The printing system as claimed in claim 1 or 3, wherein the access information transmitted by the print instruction transmitting unit of the terminal is address information and authentication information for accessing the content data to be printed.

5. The printing system as claimed in any one of claims 1, 3 or 4, wherein
the print server includes a data format conversion unit for converting the data format of the content data acquired by the print data acquiring unit to a printable format for a printer indicated by the print instruction information from the terminal.

6. The printing system as claimed in any one of claims 1, 3, 4 or 5, wherein
the print server includes a data compression unit for compressing the content data acquired by the print data acquiring unit; and
the printer includes a data decompression unit for decompressing the content data from the print server.

7. The printing system as claimed in claim 2, wherein
the browsing content management server includes an expiration date determining unit for determining whether or not expiration date is reached with respect to the content data stored in the browsing content storage section, and a content deleting unit for deleting the expired content data.

8. A printing method where a web server for managing a website, a terminal having a function of accessing the website, a printer having a communication function, and a print server having a communication function are connected to each other by way of a network, the method comprising the steps of:
a print instruction sending step in which the terminal sends print instruction information containing access information for accessing content data to be printed in the website to the print server;
a print data acquiring step in which the print server accesses the web server according to the print instruction information and acquires the content data to be printed;
a print data transmitting step in which the print server transmits the acquired content data to the printer; and
a printing step in which the printer prints the content data from the print server according to the instruction from the print server.

9. The printing method as claimed in claim 8, further comprising the step of:
a data format converting step in which the print server converts the data format of the acquired content data to a printable format for the printer after the print data acquiring step.

10. The printing method as claimed in claim 8 or 9, further comprising the step of:
a data compression step in which the print server compresses the acquired content data after the print data acquiring step, and
a data decompression step in which the printer decompresses the content data from the print server before the printing step.

11. A printing method where a web server for managing a website, a terminal having a function of accessing the website, a printer having a communication function, and a print server and a browsing content management server having a communication function are connected to each other by way of a network, the method comprising the steps of:
an access information transmitting step in which the terminal transmits access information for accessing the content data of the website accessed by the terminal to the print server;
a content data acquiring step in which the print server accesses the web server according to the access information and acquires the corresponding content data;
a content data transmitting step in which the print server transmits the acquired content data and the corresponding access information to the browsing content management server;
a content data storing step in which the browsing content management server stores the content data associated with the access information;
a print instruction sending step in which the terminal sends print instruction information containing access information for accessing the content data to be printed to the print server;
a print instruction transferring step in which the print server transfers the print instruction information to the browsing content management server;
a print data selecting step in which the browsing content management server selects the content data to be printed based on the access information contained in the print instruction information;
a print data transmitting step in which the browsing content management server transmits the selected content data to the printer; and
a printing step in which the printer prints the content data from the browsing content management server according to the instruction from the browsing content management server.

12. The printing method as claimed in claim 11, further comprising the step of:
an expiration date determining step in which the browsing content management server determines whether or not the expiration date is reached with respect to the stored content data; and
a content deleting step in which the browsing content management server deletes the expired content data after the access data storing step.

13. A printing program for printing a content of a website managed by a web server accessed by a terminal, wherein the program is a printing program for a computer to execute:
a print instruction information receiving process of receiving print instruction information containing access information for accessing the content data to be printed in the website from the terminal;
a print data reading process of accessing the website according to the access information and reading the content data to be printed ; and
a print instruction process of transmitting the read content data to the printer.

14. The printing program as claimed in claim 13, wherein the computer further executes a data format converting process of converting the data format of the content data read in the print data reading process to a printable format of the printer.

15. The printing program as claimed in claim 13 or 14, wherein the computer further executes a data compression process of compressing the content data read in the print data reading process.

16. The printing program as claimed in any one of claims 13 to 15, wherein the computer further executes,
a data access information receiving process of receiving the access information for accessing the content data of the website accessed by the terminal from the terminal,
a data reading process of accessing the corresponding content data according to the access information and reading the content data, and
a content data storing process of storing the read content data and the corresponding access information; and
a process content in the print data reading process is specified so that the content data corresponding to the print instruction information read in the print instruction information reading process is read among the content data stored in the content data storing process.

17. The printing program as claimed in any one of claims 13 to 16, wherein the computer further executes,
an expiration date determining process of determining whether or not expiration date is reached with respect to the content data stored in the content data storing process, and
a content deleting process of deleting the expired content data.
